# FASCICULE DE BREVET EUROPEEN

(11) **EP 2 365 871 B1**
(45) Date de publication et mention de la délivrance du brevet: **27.01.2016**
(21) Numéro de dépôt: 09804272.4
(22) Date de dépôt: 17.12.2009
(51) Int. Cl.: B01F 17/50

(54) **PROCÉDÉ DE FABRICATION D'UN ÉMULSIFIANT ET PROCÉDÉ DE FABRICATION D'UNE ÉMULSION.**
VERFAHREN ZUR HERSTELLUNG EINES EMULGATORS UND VERFAHREN ZUR HERSTELLUNG EINER EMULSION
METHOD FOR PRODUCING AN EMULSIFIER AND METHOD FOR PRODUCING AN EMULSION

(30) Priorité: 17.12.2008 FR 0807095
(43) Date de publication de la demande: 21.09.2011
(73) Titulaire: Université de Picardie Jules Verne, 80025 Amiens Cedex (FR)
(72) Inventeur: QUENEUDEC-T'KINT, Michèle, F-80025 Amiens Cedex (FR); GOULLIEUX, Adeline, F-80025 Amiens Cedex (FR); KHAZMA, Mahmoud, F-80025 Amiens Cedex (FR)
(74) Mandataire: Schreiber, Ina
(86) Numéro de dépôt international: PCT/FR2009/001443
(87) Numéro de publication internationale: WO 2010/076424

(56) Documents cités:
- GB-A- 1 292 071
- OOMAH B D ET AL: "FLAXSEED PROTEINS - A REVIEW" FOOD CHEMISTRY, ELSEVIER SCIENCE PUBLISHERS LTD, GB, vol. 48, 1 janvier 1993 (1993-01-01), pages 109-114, XP000916255 ISSN: 0308-8146
- DATABASE COMPENDEX [Online] ENGINEERING INFORMATION, INC., NEW YORK, NY, US; 2005, ROJAS O J ET AL: "Lignins as stabilizers of oil-in-water emulsions in the framework of the surfactant affinity difference approach" XP002541333 Database accession no. E2006019624658 & APPITA ANNUAL CONFERENCE - 59TH APPITA ANNUAL CONFERENCE AND EXHIBITION, INCORPORATING THE 13TH ISWFPC: INTERNATIONAL SYMPOSIUM ON WOOD, FIBRE AND PULPING CHEMISTRY - PROCEEDINGS. APPITA CONFERENCE SESSIONS 2005 APPITA INC. AU, vol. 3, 2005, pages 329-336,
- OOMAH B D ET AL: "Fractionation of flaxseed with a batch dehuller" INDUSTRIAL CROPS AND PRODUCTS, ELSEVIER, NL, vol. 9, no. 1, 1 janvier 1998 (1998-01-01) , pages 19-27, XP002506382 ISSN: 0926-6690

## Description

L'invention concerne un procédé d'obtention d'un émulsifiant ainsi qu'un procédé de fabrication d'une émulsion.

L'invention trouvera une application particulièrement pour valoriser les poussières issues du teillage du lin.

L'émulsion obtenue trouvera une application particulière dans le domaine des matériaux pour l'isolation thermique et/ou phonique.

L'émulsifiant et/ou l'émulsion obtenue trouvera également une utilisation dans des applications cosmétiques, pharmaceutiques ou toute autre utilisation de corps gras.

L'invention concernera également l'utilisation de l'émulsion selon l'invention pour l'hydrophobisation de matières végétales permettant de proposer une nouvelle application aux produits ou coproduits ligno cellulosiques, produits tels que notamment anas de lin, anas de chanvre, les cannes de miscanthus, de sorgho, de bambou, de maïs et des coproduits de l'industrie alimentaire comme la pulpe de betterave, les rafles de maïs, les pailles de céréales, de lin, de chanvre, de bois (feuillus ou résineux), les fibres végétales ou tout autre produit ligno cellulosique.

Les différents produits cellulosiques, traités par l'émulsion pourraient notamment être utilisés dans une matrice cimentaire.

Le lin est connu pour sa filière textile. Il est arraché, non coupé, pour conserver la longueur des fibres, puis est laissé sur le sol humide afin que le rouissage s'opère sous l'action des microorganismes. Il se produit une désagrégation plus ou moins intense des ciments pectiques qui lient les fibres entre elles et avec les autres tissus. Suit ensuite une opération mécanique, le teillage qui a pour objet la séparation des faisceaux fibreux par action mécanique. Au cours de cette opération, les fibres sont séparées des parties ligneuses de la tige.

A l'issue du teillage, on obtient ainsi:
- la filasse, constituée de fibres longues servant à la fabrication de tissu noble,
- les étoupes, constituées de fibres courtes pour des tissus plus grossiers ou de la corderie,
- les anas, petits fragments ligneux utilisés pour le paillage ou les litières,
- les graines,
- les poussières de teillage.

Les poussières issues du teillage sont peu valorisées. Dans le cas du lin textile, elles représentent environ 10 % de la bio masse récoltée : la quantité générée annuellement en France est estimée à 600 tonnes.

Elles sont actuellement principalement utilisées dans la fabrication des terreaux, d'où la nécessité de trouver d'autres voies d'utilisation de ces poussières. Ces poussières sont composées (en masse), d'environ 5 % d'eau, 49 % de matières minérales et 46 % de matières organiques (dont environ 9 % d'hémicelluloses, 15 % de cellulose, 11 % de lignines et 11 % de substances solubles).

Les anas de lin constituent la partie ligneuse de la plante et résultent du broyage de la partie centrale de la tige. Les observations conduites sur différents échantillons mettent en évidence des particules élémentaires de dimensions moyennes de 6 à 7 mm de longueur et d'environ 1 mm de largeur. Les anas possèdent une structure alvéolaire caractéristique. Ils constituent 50 % des produits du lin. Ils sont composés principalement de cellulose, de lignines, d'hémicellulose et d'une petite quantité de pectines.

L'huile de lin (HDL) est composée de linoléine, soit l'ensemble des esters glycériques et de l'acide linoléique (acide gras diéthylénique) et de l'acide linoléique (acide gras triéthylénique). Ces acides gras sont riches en insaturations d'où la forte capacité de l'HDL à se polymériser. L'huile de lin fixe lentement l'oxygène de l'air et forme une pellicule solide, phénomène causé par une réaction d'oxydation produisant un dégagement de chaleur. Le temps de polymérisation est relativement long mais peut être réduit par une émulsification

Cela étant, une émulsion est un mélange intime de deux substances liquides non miscibles. L'un des deux liquides est dispersé dans l'autre sous forme de globules. Le liquide sous forme de globules est appelé phase dispersée, l'autre est nommé phase continue.

Il existe deux types d'émulsion, huile dans l'eau et eau dans l'huile qui diffèrent selon la nature des phases continues et dispersées.

Pour stabiliser une émulsion, il est nécessaire d'ajouter un agent émulsifiant. Un émulsifiant est un tensioactif, c'est-à-dire une molécule amphiphile (qui a des affinités à la fois pour l'eau et l'huile grâce à la présence de groupements polaires et apolaires), de nature protéique, glucidique, voire minérale.

Parmi les émulsifiants utilisés, on trouve des protéines et plus particulièrement, les protéines de soja (dénaturées ou non) et la lécithine. Ce type d'émulsifiants est très sensible au pH. Par exemple, à pH 2, un mélange de protéines dénaturées et de lécithine ne constitue pas un bon émulsifiant, tandis qu'à pH 5,5 ce même mélange est un bon émulsifiant. Le pH a donc une action sur la stabilité des émulsions et notamment sur les phénomènes de décantation.

Le GB 1292071 décrit des émulsifiants obtenus des goudrons de lignine. L'article "Flaxseed proteins - a review" (Food Chemistry 48 (1993), p. 109-114) divulgue des protéins de lin et leur utilisation comme émulsifiants dans les produits alimentaires.

Le XP254133 divulgue des lignines comme agents de stabilisation dans les émulsions huile-dans-l'eau.

Les pectines sont actuellement un des principaux additifs alimentaires grâce à leurs capacités de gélifiants et de stabilisants. Elles sont extraites des parois des cellules végétales spécialement de citron, de la pomme, et de la betterave. L'utilisation des pectines comme émulsifiant a été rapportée en 1951 par plusieurs chercheurs qui suggèrent l'utilisation des pectines comme émulsifiants dans les huiles végétales, mayonnaises ... Les pectines de citron et de betteraves, notamment, sont capables de stabiliser une émulsion. Les pectines ont une structure très complexe qui diffère selon leur source. Il s'agit de polymères d'acide D-galacturonique en liaison α(1-4) avec des segments de rhamnogalacturonane combiné avec l'acide galacturonique et le L-rhamnopyranose par des liaisons α(1-2).

Des études ont montré la possibilité d'utiliser des protéines et des polysaccharides conjugués pour stabiliser les émulsions. La paroi des cellules végétales contient des protéines et principalement des hydroxyprolines. Bien qu'il n'existe aucune preuve d'une liaison covalente entre les pectines et les protéines au sein de cette paroi, différentes analyses moléculaires menées sur des échantillons de pectines extraites des parois cellulaires révèlent la présence d'hydroxyprolines.

Selon certains auteurs, ces assemblages pectines/hydroxyproline entoureraient les gouttelettes d'huile grâce à leur partie protéinique. Des interactions entre différentes chaînes apparaissent grâce aux ions calcium existant naturellement dans les molécules de pectines et stabilisent la distance entre les gouttelettes.

Des solides peuvent être utilisés pour stabiliser l'interface eau/huile. Sable siliceux, kaolinite et bentonite ont été étudiés pour la stabilisation d'une émulsion hexane/eau. La taille de la particule et sa capacité à capter l'eau sont deux facteurs importants de cette stabilisation. Quand on met en présence seulement le mélange eau/huile et solide sans autre produit, on obtient différents résultats. Un mélange de sable siliceux conduit à deux phases séparées et une production importante de mousse. Avec la kaolinite, une émulsion instable ayant l'apparence d'une crème est obtenue. Enfin, la bentonite permet une bonne émulsification mais la stabilité de l'émulsion est faible. Cette instabilité est due aux forces de répulsion entre les particules solides. L'addition d'une certaine quantité de chlorure de sodium améliore la stabilité de cette émulsion. L'impact d'autres particules solides sur des émulsions a été étudié. Les sucres enrobés avec l'acide stéarique ont une hydrophobicité qui permet d'avoir une émulsion stable de type huile dans l'eau. Cette émulsion reste stable même lorsqu'on augmente la quantité d'huile et elle devient de type eau dans l'huile.

Le but de la présente invention est de proposer un nouveau procédé d'obtention d'un émulsifiant ou d'une émulsion.

Un autre but de la présente invention est de permettre une meilleure valorisation des coproduits du lin, plus particulièrement des poussières de teillage.

Un autre but de l'invention est de proposer un procédé de traitement de matières végétales, pour leur hydrophobisation ou leur agrégation et ainsi permettre la valorisation de différents produits issus de l'agriculture.

D'autres buts et avantages apparaîtront au cours de la description qui va suivre qui n'est donnée qu'à titre indicatif et qui n'a pas pour but de la limiter.

La présente invention concerne tout d'abord un procédé d'obtention d'un émulsifiant.

Selon l'invention, ce procédé consiste au moins à mélanger les poussières de défibrage séparées ou non de la fraction lignocellulosique et un corps gras, tel que acide gras saturé ou acide gras insaturé sous forme liquide. Dans le cas où les poussières contiennent une fraction lignocellulosique celle-ci doit avoir une limite granulaire supérieure de 4 mm.

Selon le procédé :
- on mélange lesdites poussières de défibrage et ledit corps gras additionné ou non d'un solvant, et notamment d'éthanol naturel, en les malaxant,
- on fait subir au mélange, malaxé ou non, un traitement thermique afin de favoriser le passage des substances contenues dans lesdites poussières de défibrage vers la phase liquide lipidique,
- le mélange peut éventuellement être soumis à centrifugation afin de séparer la phase lipidique de la phase solide constituée par les poussières de défibrage,
- le corps gras peut être constitué d'huile de lin, en tout ou partie.

L'invention concerne également un procédé de fabrication d'une émulsion entre un premier liquide, à savoir un corps gras additionné ou non d'un solvant, et un second liquide, tel que par exemple de l'eau, lesdits premier et second liquides étant non miscibles.

Le procédé, conforme à l'invention, consiste à utiliser, par rapport au total des composants suivants (en masse) :
- au plus 40 % de poussières de défibrage brutes ou séparées des fractions lignocellulosiques,
- au plus 60 % du premier liquide, ledit corps gras, tel que acide gras saturé et acide gras insaturé additionné ou non d'un solvant.

Le procédé peut comprendre les étapes suivante :
- on réalise un mélange desdites poussières de défibrage et du premier liquide additionné ou non d'un solvant,
- on chauffe le mélange,
- on sépare éventuellement la phase liquide de la phase solide,
- on mélange la phase liquide ou la totalité du premier mélange dans des proportions volumiques variables suivant la viscosité souhaitée avec ledit second liquide.

Ledit corps gras peut être constitué d'huile de lin, en tout ou partie.

L'invention sera mieux comprise à la lecture de la description détaillée suivante.

La présente invention concerne notamment une émulsion en phase aqueuse à partir d'au moins une substance végétale et son procédé d'obtention.

L'invention vise un procédé permettant de respecter les contraintes économiques et environnementales. L'utilisation de poussières de défibrage mélangées à de l'huile végétale, notamment d'huile de lin répond à ces exigences en raison de leur qualité de coproduit et produits de l'industrie agricole et de leur caractère renouvelable (récolte annuelle).

L'invention concerne en outre un procédé d'obtention d'un émulsifiant à partir du mélange de poussières de défibrage et d'un corps gras.

L'invention concerne également l'utilisation de l'émulsion pour le traitement des fibres et des substances lignocellulosiques tout comme son utilisation comme liant. Le traitement permet de réduire l'hydrophilie des fractions végétales tout en préservant ou même en améliorant le comportement mécanique des composites élaborés à partir de ces fractions végétales.

Le procédé permettant de réaliser l'émulsion aqueuse, selon l'invention, peut consister, selon un mode de réalisation à :
- malaxer les poussières de défibrage, de granulométrie inférieure à 4 mm, dans une proportion égale ou inférieure à 40 % de la masse totale du mélange, avec au moins un acide gras saturé et/ou au moins un acide gras insaturé et plus particulièrement une huile végétale, par agitation,
- ajouter ou non au corps gras un solvant organique tel que éthanol végétal pour avoir une proportion massique de matières solides comprise entre 2 et 40 %,
- réaliser un traitement thermique par chauffage classique, par micro-onde ou par tout agent augmentant la température du mélange, afin de réaliser le passage vers le milieu liquide et/ou la transformation de certaines substances présentes dans les poussières de défibrage. La phase solide peut être séparée ou non. L'agent émulsifiant peut être utilisé seul ou en combinaison avec d'autres agents émulsifiants,
- soumettre l'ensemble à une agitation, sous pression ou non, à des températures pouvant varier, puis refroidir le mélange.

L'émulsion aqueuse comprend un mélange formé d'au moins un produit ou coproduit végétal et d'au moins un acide gras saturé et/ou au moins un acide gras insaturé non substitué par un groupement hydroxyle.

L'invention s'applique tout particulièrement aux poussières de défibrage du lin dont la composition en ciments pectiques, protéines et matières minérales offre une meilleure stabilité à l'émulsion finale.

D'après l'invention, les mélanges qui donnent une viscosité suffisamment faible pour obtenir une émulsion en phase aqueuse, comprennent pour 100 parties en masse de poussières de défibrage, de 220 à 2250 parties en masse d'acides gras et, de préférence, de 400 à 500 parties en masse. Lorsque la teneur en acides gras est inférieure à environ 220 parties en masse, la fluidification du mélange est insuffisante pour obtenir sa mise en émulsion. Il est souhaitable que la teneur en acides gras n'excède pas 2250 parties en masse pour avoir une émulsion suffisamment stable.

Les acides gras auxquels s'applique l'invention sont les constituants de toute huile d'origine végétale et les acides gras mélangés ou non, les acides gras saturés ou les acides gras insaturés. L'huile de lin et l'huile de tournesol sont utilisées de préférence à tout acide gras insaturé dans la mesure où l'on souhaite une polymérisation rapide de l'émulsion.

L'invention a également pour objet un procédé de traitement pour les fibres et les particules lignocellulosiques destinées à charger ou renforcer des matrices minérales ou organiques et tout particulièrement biosourcées.

Les fractions végétales pouvant être utilisées dans le cadre de cette invention sont les fibres végétales broyées ou non, la partie ligneuse des plantes telle que les anas de lin la chènevotte (anas de chanvre), les cannes de miscanthus, de sorgho, de bambou, de maïs (...) et des coproduits de l'industrie alimentaire comme la pulpe de betteraves, les rafles de maïs, les pailles de céréales, de lin, de chanvre (...), le bois (feuillu ou résineux), les fibres végétales, en résumé tout produit ou coproduit lignocellulosique.

L'avantage de l'invention réside dans le fait que l'émulsion peut être obtenue sans utiliser d'émulsifiant de synthèse. L'émulsification par les poussières de défibrage est liée à la présence simultanée de pectines, de protéines et de silice. Ces substances permettent d'obtenir une émulsion fine et stable dans le temps dont la stabilité peut excéder une année.

Les émulsions aqueuses constituent une forme bien adaptée pour traiter la surface de différents substrats. C'est également le cas des émulsions selon l'invention qui peuvent être utilisées pour imprégner ou revêtir des fibres, des tissus, des non tissés, des films et des matières aussi différentes que le papier, le bois, ou le métal. Ces émulsions permettent de rendre une surface hydrophobe, résistant à des produits d'agression ou imperméable au gaz.

Une des applications de l'invention est la réalisation d'une solution de traitement susceptible d'être déposée à la surface des anas de lin, en vue de les utiliser comme granulats pour alléger une matrice cimentaire.

Nous décrivons ci-après quelques exemples de réalisation de l'invention.

Dans les exemples donnés, les mélanges poussières de défibrage/huile de lin sont réalisés dans un malaxeur à une température de l'ordre de 20 °C. Ils sont ensuite chauffés à une température de l'ordre de 140 °C pour les exemples 1 à 5, le mélange est centrifugé et le surnageant récupéré.

Dans les exemples suivants, donnés à titre non limitatif, on mélange 500 parties d'acide gras contre 100 parties de poussières de défibrage. L'émulsion de type eau dans l'huile est obtenue en agitant 0,5 parties d'eau pour une partie d'huile.

### Exemple 1 :

Dans le cas de la préparation citée ci-dessus, où 500 parties d'acide gras sont mélangées avec 100 parties en masse de poussières de défibrage, le diamètre moyen des particules de l'émulsion obtenue est de 40 µm. Ce diamètre moyen est de 80 µm après 18 mois. Ces résultats montrent la stabilité de l'émulsion au cours du temps.

### Exemple 2 :

Une stabilité similaire est obtenue avec l'huile de tournesol.

### Exemple 3 :

L'émulsion finale obtenue dans l'exemple 1 est mélangée avec les anas de lin de façon à avoir, pour 100 parties en masse d'émulsion, de 10 à 500 parties en masse d'anas et de 75 à 200 parties en masse d'anas de préférence.

A titre d'exemple, pour 100 parties en masse d'émulsion, 100 parties en masse d'anas sont ajoutées. Le mélange est bien malaxé et placé ou non dans une étuve à 50 °C ou autres températures pendant un temps variable selon la proportion d'huile.

Le temps nécessaire pour polymériser l'émulsion est la moitié de celui nécessaire pour polymériser la même quantité d'huile de lin seule, résultant ainsi en une économie d'énergie importante.

Les anas obtenus après 20 jours d'étuvage à 50 °C (à titre d'exemple) présentent une couche enrobante très mince et protectrice contre une couche hétérogène et épaisse obtenue après 40 jours d'étuvage avec l'huile de lin seule selon l'état de l'art. La diminution du caractère hydrophile des anas enrobés est testée. L'absorption d'eau n'atteint que 79 % en masse contre 213 % obtenue avec les anas non enrobés.

L'émulsion polymérisée présente une porosité (des vides). Ceci contribue à l'allègement du polymère sans diminution de son caractère hydrophobe, et par voie de conséquence, à l'allègement des anas ainsi enrobés comparativement aux anas enrobés par l'huile de l'in seule.

La masse volumique des anas enrobés avec l'émulsion est de 128 à 132 kg/m³ contre 96 à 103 kg/m³ pour les anas bruts et 141 à 161 kg/m³ pour les anas enrobés avec l'huile de lin seule.

### Exemple 4 :

La même efficacité a été obtenue dans le traitement d'autres produits lignocellulosiques comme la chènevotte ou le miscanthus.

### Exemple 5 :

Tous les ingrédients utilisés sont identiques à ceux employés dans l'exemple 3 précédent. Les anas sont notamment utilisés comme granulats dans une matrice cimentaire.

Les propriétés mécaniques des composites préparés avec les anas enrobés montrent une amélioration de 600 à 900 % par rapport aux composites cimentaires préparés avec les anas non enrobés.

De même, les propriétés hydriques des composites ainsi préparés présentent une amélioration de 55 à 62 % de leurs variations dimensionnelles extrêmes.

### Exemple 6 :

Tous les ingrédients utilisés sont identiques à ceux employés dans l'exemple 5 précédent. Dans cet exemple, le culot n'est pas éliminé (émulsion poussiéreuse), les anas sont traités par l'ensemble. Les anas sont notamment utilisés comme granulats dans une matrice cimentaire (à titre d'exemple).

Les propriétés mécaniques des composites préparés avec les anas ainsi enrobés montrent une amélioration similaire à celle de l'exemple précédent.

Le tableau ci-dessous stipule les valeurs de résistance à la flexion (Rf), résistance à la compression (Rc), mesurées selon la norme EN 196-1, et la masse volumique p des composites cimentaires préparés en utilisant différents enrobages, à savoir : standard (sans enrobage), émulsion conforme à l'invention selon l'exemple 5, huile de lin seule, et émulsion poussiéreuse selon l'exemple 6.

| | Rf [Mpa] | Rc [Mpa] | ρ [kg/m³] |
|---|---|---|---|
| Standard | 0,17 ± 0,01 | 0,40 ± 0,06 | 579,07 ± 2,99 |
| Emulsion | 1,03 ± 0,06 | 3,51 ± 0,67 | 647,80 ± 3,93 |
| HDL | 1,24 ± 0,10 | 3,81 ± 0,48 | 730,87 ± 10,01 |
| Emulsion poussiéreuse | 0,99 ± 0,05 | 3,23 ± 0,72 | 728,26 ± 20,21 |

### Exemple 7 :

Une quantité adéquate d'anas de lin est mélangée à une quantité adéquate d'émulsion préparée telle que décrite précédemment à base d'huile de lin ou de tournesol. Ce mélange est moulé et placé en étuve. Après la polymérisation de l'émulsion, le démoulage est effectué.

Le matériau ainsi obtenu possède des propriétés mécaniques intéressantes notamment en ce qui concerne la déformabilité

Naturellement, d'autres modes de mise en oeuvre auraient pu être envisagés par l'homme du métier sans pour autant sortir du cadre de l'invention définie par les revendications ci-après.

## Revendications

1. Procédé d'obtention d'un émulsifiant, **caractérisé en ce qu'**il consiste au moins à mélanger des poussières de défibrage séparées de la fraction lignocellulosique ou non séparées de la fraction lignocellulosique, auquel cas la limite granulaire supérieure de cette fraction lignocellulosique est de 4 mm, et un corps gras, tel que acide gras saturé ou acide gras insaturé, sous forme liquide.

2. Procédé selon la revendication 1, dans lequel on mélange lesdites poussières de défibrage et ledit corps gras en les malaxant.

3. Procédé selon la revendication 1 ou 2, dans lequel on fait subir au mélange, malaxé ou non, un traitement thermique afin de favoriser le passage des substances contenues dans les poussières de défibrage vers la phase liquide.

4. Procédé selon la revendication 3, dans lequel on retire la fraction émulsifiante du mélange.

5. Procédé selon l'une des revendications 1 à 4, dans lequel les poussières de défibrage sont des poussières de défibrage du lin.

6. Procédé selon l'une des revendications 1 à 5, dans lequel le corps gras est constitué d'huile de lin, en tout ou partie, et/ou encore de l'huile de tournesol, en tout ou partie.

7. Procédé de fabrication d'une émulsion entre un premier liquide, à savoir un corps gras, et un second liquide, tel que par exemple de l'eau, lesdits premier et second liquides étant non miscibles, **caractérisé en ce que** ledit procédé consiste à utiliser, par rapport au total des composants (a) et (b) suivants (en masse) :
(a) au plus 40% de poussières de défibrage séparées de la fraction lignocellulosique ou non séparées de la fraction lignocellulosique, auquel cas la limite granulaire supérieure de cette fraction lignocellulosique est de 4 mm,
(b) au plus 60% du premier liquide, ledit corps gras, tels que acide gras saturé et/ou acide gras insaturé.

8. Procédé selon la revendication 7 comprenant les étapes suivantes :
- on réalise un mélange desdites poussières et dudit premier liquide,
- on chauffe le mélange,
- on ajoute ledit second liquide au mélange,
- on agite l'ensemble.

9. Procédé selon la revendication 8, dans lequel, ledit premier liquide est mélangé avec un solvant, tel que notamment éthanol naturel.

10. Procédé selon l'une des revendications 7 à 9, dans lequel les poussières de défibrage sont des poussières de défibrage du lin.

11. Procédé selon l'une des revendications 7 à 10, dans lequel ledit corps gras est constitué d'huile de lin, en tout ou partie, et/ou encore de l'huile de tournesol en tout ou partie.

12. Utilisation de l'émulsion obtenue selon le procédé de l'une des revendications 7 à 11 pour l'hydrophobisation ou l'agrégation de matières végétales, telles que des anas de lin, des anas de chanvre, des cannes de miscanthus, de sorgho, de bambou, de maïs, ou des coproduits de l'industrie alimentaire, comme la pulpe de betterave, les rafles de maïs, les pailles de céréales, de lin, de chanvre, de bois, ou tout autre produit lignocellulosique.

13. Utilisation de l'émulsion obtenue selon le procédé de l'une des revendications 7 à 11 comme liant dans le domaine des matériaux pour l'isolation thermique et/ou phonique.

14. Utilisation de l'émulsifiant obtenu selon le procédé de l'une des revendications 1 à 6 ou de l'émulsion obtenue selon le procédé de l'une des revendications 7 à 11 dans l'industrie cosmétique, pharmaceutique ou dans l'industrie des corps gras.

## Patentansprüche

1. Verfahren zum Erhalt eines Emulgators, **dadurch gekennzeichnet, dass** es darin besteht, mindestens Zerfaserungstäube, die von der Lignocellulosefraktion getrennt sind oder die nicht von der Lignocellulosefraktion getrennt sind, wobei in diesem Fall die obere Korngrenze dieser Lignocellulosefraktion 4 mm beträgt, und eine Fettsubstanz, wie beispielsweise gesättigte Fettsäure oder ungesättigte Fettsäure, in flüssiger Form zu mischen.

2. Verfahren nach Anspruch 1, wobei die Zerfaserungsstäube und die Fettsubstanz durch Verkneten gemischt werden.

3. Verfahren nach Anspruch 1 oder 2, wobei das verknetete oder nicht verknetete Gemisch einer Wärmebehandlung unterzogen wird, um den Übergang der Substanzen, die in den Zerfaserungsstäuben enthalten sind, in die flüssige Phase zu fördern.

4. Verfahren nach Anspruch 3, wobei die Emulgatorfraktion dem Gemisch entzogen wird.

5. Verfahren nach einem der Ansprüche 1 bis 4, wobei es sich bei den Zerfaserungsstäuben um Leinen-Zerfaserungsstäube handelt.

6. Verfahren nach einem der Ansprüche 1 bis 5, wobei die Fettsubstanz ganz oder teilweise aus Leinöl und/oder auch ganz oder teilweise aus Sonnenblumenöl besteht.

7. Verfahren zur Herstellung einer Emulsion aus einer ersten Flüssigkeit, nämlich einer Fettsubstanz, und einer zweiten Flüssigkeit, wie zum Beispiel Wasser, wobei die erste und die zweite Flüssigkeit nicht mischbar sind, **dadurch gekennzeichnet, dass** das Verfahren darin besteht, bezogen auf die Gesamtmenge der folgenden Bestandteile (a) und (b) (in Gewichtsanteilen):
(a) höchstens 40 % Zerfaserungsstäube, die von der Lignocellulosefraktion getrennt sind, oder die nicht von der Lignocellulosefraktion getrennt sind, wobei in diesem Fall die obere Korngröße dieser Lignocellulosefraktion 4 mm beträgt,
(b) höchstens 60 % der ersten Flüssigkeit, der Fettsubstanz, wie beispielsweise gesättigte Fettsäure und/oder ungesättigte Fettsäure, zu verwenden.

8. Verfahren nach Anspruch 7, das die folgenden Schritte aufweist:
- Herstellen eines Gemischs aus den Stäuben und der ersten Flüssigkeit,
- Erhitzen des Gemischs,
- Zugeben der zweiten Flüssigkeit zu dem Gemisch,
- Rühren des Ganzen.

9. Verfahren nach Anspruch 8, wobei die erste Flüssigkeit mit einem Lösemittel, wie insbesondere natürlichem Ethanol, gemischt wird.

10. Verfahren nach einem der Ansprüche 7 bis 9, wobei es sich bei den Zerfasungsstäuben um Leinen-Zerfaserungsstäube handelt.

11. Verfahren nach einem der Ansprüche 7 bis 10, wobei die Fettsubstanz ganz oder teilweise aus Leinöl und/oder auch ganz oder teilweise aus Sonnenblumenöl besteht.

12. Verwendung der Emulsion, die gemäß dem Verfahren nach einem der Ansprüche 7 bis 11 erhalten wird, zur Hydrophobierung oder Aggregation von Pflanzenmaterialien, wie beispielsweise Flachsschäben, Hanfschäben, Elefantengrasstängeln, Sorghumstängeln, Bambusrohren, Maisstängeln oder Nebenprodukten der Lebensmittelindustrie, wie Zuckerrübenschnitzeln, Maisspindeln, stroh von Getreide, Flachs, Hanf, Holz oder jedem anderen Lignocelluloseprodukt.

13. Verwendung der Emulsion, die gemäß dem Verfahren nach einem der Ansprüche 7 bis 11 erhalten wurde, als Bindemittel auf dem Gebiet der Materialien zur Wärme- und/oder Schallisolierung.

14. Verwendung der Emulsion, die gemäß dem Verfahren nach einem der Ansprüche 1 bis 6 erhalten wurde, oder der Emulsion, die gemäß dem Verfahren nach einem der Ansprüche 7 bis 11 erhalten wurde, in der kosmetischen Industrie, der pharmazeutischen Industrie oder bei der industriellen Herstellung von Ölen und Fetten.

## Claims

1. Method for obtaining an emulsifier, **characterized in that** it consists at least in mixing defibering dust separated or not separated from the lignocellulosic fraction, in which case the upper particle size limit of said lignocellulosic fraction is 4 mm, and a fat, such as saturated fatty acid or unsaturated fatty acid, in liquid form.

2. Method according to claim 1, wherein said defibering dust and said fats are mixed by kneading.

3. Method according to claim 1 or 2, wherein the mixture, kneaded or not, is subjected to a heat treatment in order to promote the passage of substances contained in the defibering dust toward the liquid phase.

4. Method according to claim 3, wherein the emulsifying fraction is removed from the mixture.

5. Method according to one of claims 1 to 4, wherein the defibering dust is flax defibering dust.

6. Method according to one of claims 1 to 5, wherein the fat consists entirely or partially of linseed oil and/or entirely or partially of sunflower oil.

7. Method for producing an emulsion between a first liquid, namely a fat, and a second liquid, such as, for example, water, said first and second liquids being non-miscible, **characterized in that** said method consists in using, with respect to the total of the following components (a) and (b) (by mass):
(a) no more than 40% defibering dust separated from the lignocellulosic fraction or not separated from the lignocellulosic fraction, in which case the upper particle size limit of said lignocellulosic fraction is 4 mm,
(b) no more than 60% of the first liquid, said fat, such as saturated fatty acid and/or unsaturated fatty acid.

8. Method according to claim 7 including the following steps:
- a mixture of said dust and said first liquid is produced,
- the mixture is heated,
- said second liquid is added to the mixture,
- the whole is agitated.

9. Method according to claim 8, wherein said first liquid is mixed with a solvent, such as, in particular, natural ethanol.

10. Method according to one of claims 7 to 9, wherein the defibering dust is flax defibering dust.

11. Method according to one of claims 7 to 10, wherein said fat consists entirely or partially of linseed oil, and/or entirely or partially of sunflower oil.

12. Use of the emulsion obtained according to the method of one of claims 7 to 11 for hydrophobization or aggregation of vegetable matter, such as flax shive, hemp shive, cane of miscanthus, sorghum, bamboo, corn, or food industry byproducts, such as beet pulp, corn cob, straw of cereal, flax, hemp, wood or any other lignocellulosic product.

13. Use of the emulsion obtained according to the method of one of claims 7 to 11 as a binder in the field of materials for thermal insulation and/or soundproofing.

14. Use of the emulsifier obtained according to the method of one of claims 1 to 6 or the emulsion obtained according to the method of one of claims 7 to 11 in the cosmetic or pharmaceutical industry or in the fats industry.
